# EUROPEAN PATENT APPLICATION

(11) **EP 2 190 202 A1**
(43) Date of publication of application: **26.05.2010**
(21) Application number: 09176914.1
(22) Date of filing: 24.11.2009
(51) Int. Cl.: H04N 7/24

(54) **Apparatus for receiving a signal and method of receiving a signal**

(30) Priority: 24.11.2008 US 117562 P
(71) Applicant: LG Electronics Inc., Seoul 150-721 (KR)
(72) Inventor: Hong, Ho Taek, Seoul 137-724 (KR); Lee, Joon Hui, Seoul 137-724 (KR); Seo, Jong Yeul, Seoul 137-724 (KR)
(74) Representative: Cabinet Plasseraud

(57) **Abstract**

The present invention relates to apparatus for receiving a signal and a corresponding method. One aspect of the present invention provides an apparatus, the apparatus comprising: a frontend configured to receive the signal including metadata; a decoding unit configured to decode the received signal; a metadata processing unit configured to transform the decoded metadata to common type metadata; a service managing unit configured to store service metadata included in the common type metadata.

## Description

### BACKGROUND OF THE INVENTION

### Field of the Invention

The present invention relates to an apparatus for receiving a signal and a method of receiving a signal.

### Description of the Related Art

The present invention relates to a configuration for common use of a backend part in regard to a broadcasting system adopting Internet Protocol (IP) based broadcasting.

Examples of standards adopting an IP-based transmission method of related-art broadcasting methods include Digital Video Broadcasting-Handheld (DVB-H), Internet Protocol Television (IPTV), and Digital Video Broadcasting-Satelite2/Terrestria12 /Cable2 (DVB-S2/T2/C2). They have a common point in that they are based on IP, whereas they have a significant difference in a method for transmitting IP, metadata configuration method, and transmission codec.

This difference is far away from an original purpose for configuring interoperable system using the common point of the IP basis, and is not helpful to contents exchange between standards and usage of IP-based contents using IP-based devices. Accordingly, it is necessary to prepare some common bases in regard to an IP-based contents configuration method or signaling method.

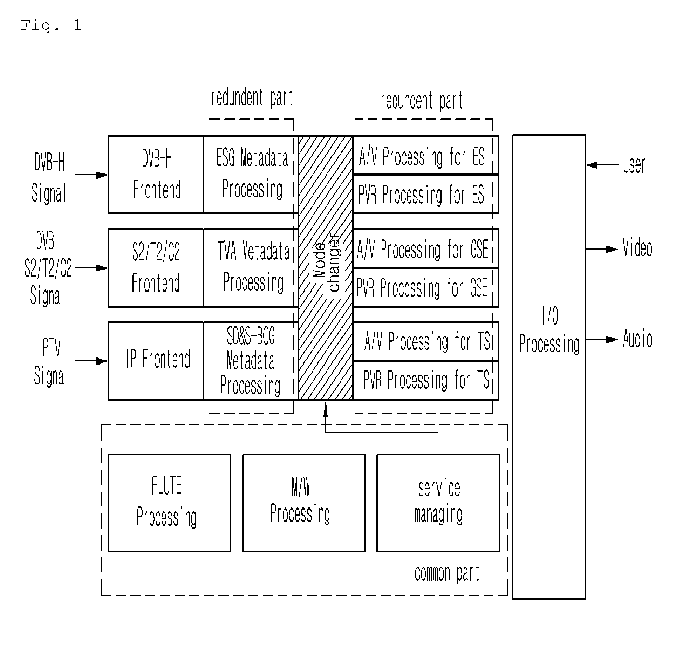

Fig. 1 shows an example of related art hybrid receiver. Fig. 1 is a diagram illustrating a basic structure for making a hybrid receiver of DVB-H and other systems. Since frontends of each method and metadata in use are basically different, metadata processing blocks should be individually configured. Also, since IPTV, DVB-H, and DVB-S2/C2/T2 use Transport Stream (TS) method, Elementary Stream (ES) method, and TS or Generic Stream Encapsulation (GSE), respectively, Audio/Video (A/V) processing and PVR processing are different. Accordingly, it should be configured into a form in which several receivers are actually mounted in one receiver by using in common only File Delivery over Unidirectional Transport (FLUTE) processing, Middle Ware (M/W) processing, service managing, and Input/Output (I/O) processing, and providing a mode changer for forcibly changing other parts according to a user's input. This method can not make proper use of a hybrid concept that performs various functions using one system.

### SUMMARY OF THE INVENTION

Embodiments provide an apparatus receiving a signal and a method of receiving a signal that makes proper use of a hybrid concept that performs various functions using one system.

Accordingly, the present invention is directed to an apparatus receiving a signal and a method of receiving a signal that substantially obviate one or more problems due to limitations and disadvantages of the related art.

An aspect of the present invention provides an apparatus for receiving a signal. The apparatus comprises a frontend configured to receive the signal including metadata, a decoding unit configured to decode the received signal, a metadata processing unit configured to transform the decoded metadata to common type metadata, and a service managing unit configured to store service metadata included in the common type metadata.

Another aspect of the present invention provides a method of receiving a signal. The method comprises receiving the signal including metadata, decoding the received signal, transforming the decoded metadata to common type metadata, and storing service metadata included in the common type metadata.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention.

Fig. 1 shows an example of related art hybrid receiver.

Fig. 2 shows an example of broadcasting receiver according to present invention.

Fig. 3 shows an example of detailed broadcasting receiver according to present invention.

Fig. 4 shows a flowchart illustrating an example of broadcast frontend action procedures.

Fig. 5 shows a flowchart illustrating an example of IP frontend, FLUTE processing unit, metadata processing unit, and middleware processing unit action procedures.

Fig. 6 shows a flowchart illustrating an example of audio/video processing unit action procedures.

Fig. 7 is an example of RTP payload header for clock recovery, trick play and scrambler.

Fig. 8 is an example of detailed RTP payload header for clock recovery, trick play and scrambler.

Fig. 9 is an example of PEU header for clock recovery, trick play and scrambler used for PVR operation.

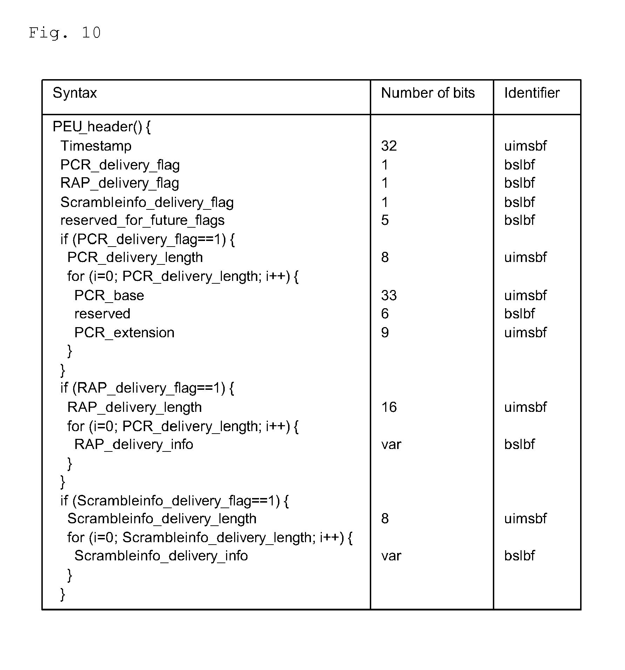

Fig. 10 is an example of detailed PEU header for clock recovery, trick play and scrambler used for PVR operation.

### DESCRIPTION OF THE PREFERRED EMBODIMENTS

References will now be made in detail to the preferred embodiments of the present invention, examples of which are illustrated in the accompanying drawings.

In the following description, the term "service" is indicative of either broadcast contents which can be transmitted/received by the signal transmission/reception apparatus.

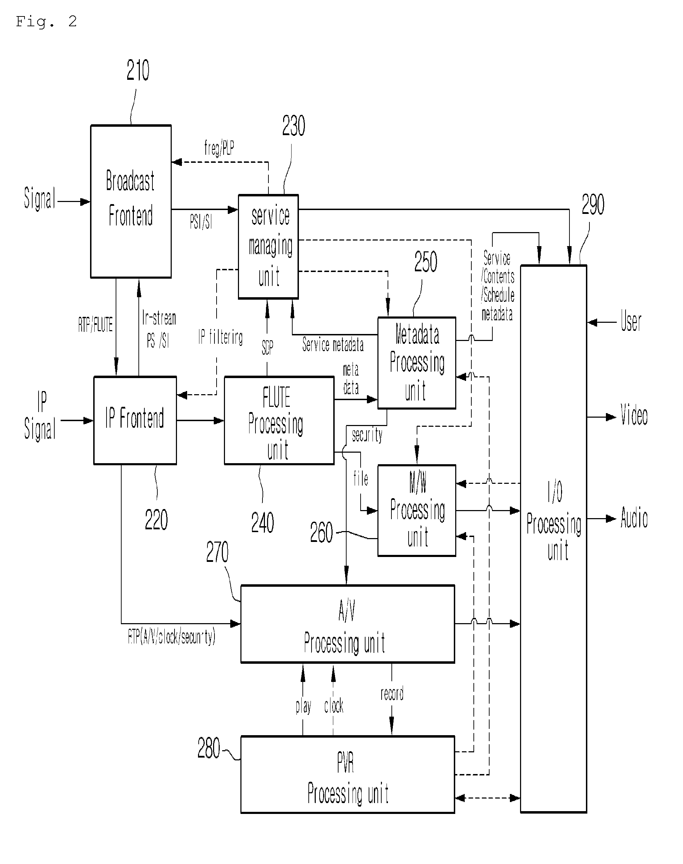

Fig. 2 is an example of broadcasting receiver according to present invention. Referring to Fig. 2, this example of broadcasting receiver includes a frontend such as a broadcast frontend 210 and IP frontend 220, service managing unit 230, a decoding unit such as FLUTE processing unit 240, metadata processing unit 250, Middle Ware (M/W) processing unit 260, Audio/Video (A/V) processing unit 270, Personal Video Recorder (PVR) processing unit 280, and Input/Output (I/O) processing unit 290.

Fig. 2 shows the total system based on IP. This example of broadcasting receiver shows a configuration including various IP-based system such as IPTV, DVB-H, and DVB-S2/T2/C2, which can support a hybrid method. For a configuration using IPTV, the broadcast frontend 210 may be removed. For a configuration using a radio-wave receipt-based system such as DVB-H/S2/T2/C2, only the IP frontend 220 may be removed. A difference between DVB-H and DVB-S2/T2/C2 is whether to be transmitted based on Multi Protocol Encapsulation (MPE) or Generic Stream Encapsulation (GSE) after radio-wave receipt, and thus decapsulator may be configured according to the difference.

As shown in Fig. 2, if configured based on IP, the total system except receiving-end can be identically reused. Obstacles to this may be as follows:

1. Metadata of each method is differently configured (SD&S+BCG for IPTV, ESG for DVB-H, and undefined for DVB S2/T2/C2).

2. Stream transmitted using Real-time Transport Protocol (RTP) is ES for DVB-H, and TS for IPTV and DVB-S2/T2/C2.

3. Method for delivering clock recovery and scramble control information.

4. In configuration of PVR, trick mode support and scramble/clock recovery information storage/play method.

The present invention provides the following implementation guideline as prerequisites for overcoming the above obstacles and configuring a common system.

1. Metadata of each method constitutes common metadata including common contents according to receiving methods. For this, metadata convertor for each method may be used to change the metadata of each method into the common type metadata. For example, Extensible Stylesheet Language Transformations (XSLT) may be used for metadata convertor.

2. The transmission is performed based on ES. It is very irrational in the aspect of transmission efficiency to put up TS on IP. Also, there is a limitation in that a TS decoder should be unnecessarily applied to a receiver.

3. Clock recovery and scramble control information is transmitted/processed at an RTP end

4. In configuration of PVR, information such as clock/time/Random Access Point (RAP) is stored in form of a header.

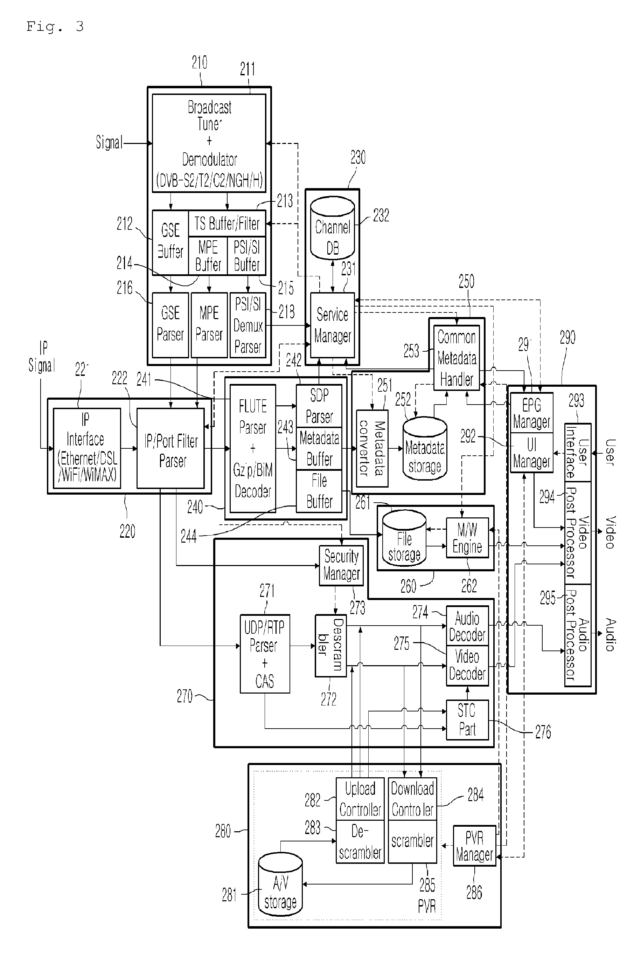

Based on these prerequisites, the total system will be more fully described with reference to Fig 3, which is a detailed view of the system.

The broadcast frontend 210 includes a broadcast tuner/demodulator 210, GSE buffer 212, TS buffer/filter 213, MPE buffer 214, Program Specific Information/Service Information (PSI/SI) buffer 215, GSE parser 216, MPE parser 217, and PSI/SI demux parser 218. The broadcast frontend 210 serves to receive a broadcasting signal, and decode the broadcasting signal into an appropriate form according to a transmission method to output an IP packet.

The broadcast tuner/demodulator 210 receives the broadcasting signal to output in form of stream. For example, GSE/TS is for DVB-S2/T2/C2/NGH, and TS is for DVB-H. The GSE buffer 212 buffers and the GSE parser 216 decodes a GSE stream to output an IP packet. The TS buffer/filter 213 buffers and filters a TS stream. The MPE buffer 214 and MPE parser 217 extract an MPE private section from the TS stream to output an IP packet. The PSI/SI buffer 215 buffers a PSI/SI signal in the TS stream, and the PSI/SI demux/parser 218 decodes it to deliver information on the MPE transmission to a service manager.

The IP frontend 220 includes an IP interface 221 and IP/port filter/parser 222. The IP frontend 220 serves to receive an IP-based signal to deliver it to an appropriate processing unit according to a request of a service manager 231 of the service managing unit 230. The IP interface 221 indicates an interface end for Internet connection such as Ethernet, DSL, WiFi, and WiMAX. The IP/Port Filter/Parser 222 delivers filters a packet corresponding to a specific IP/Port to deliver it to a next end according to a service connection information request of the service manager 231 of the service managing unit 230. In this case, IP packets decoded for each address by control of the service manager 231 are delivered to the FLUTE processing unit 240, and the A/V processing unit 270.

The service managing unit 230 includes the service manager 231 and a channel Database (DB) 232. The service managing unit 230 manages overall system control for service provided by a service provider.

The service manager 231 manages total services according to the service list and access information that are transferred as metadata. Main functions of the service manager 231 are as follows.

- The service manager 231 processes IP list information transmitted from the PSI/SI demux/parser 218 (DVB-H).

- The service manager 231 processes tuner control information such as PLP etc. transmitted from the PSI/SI demux/parser 218 (DVB-T2/C2).

- The service manager 231 processes service access information that is transmitted from a Session Description Protocol (SDP) parser 242 of the FLUTE processing unit 240.

- The service manager 231 provides the filtering information at the IP/Port filter/parser 222 according to the service access information. At this point, the service manager 231 also controls to which processing part an IP packet outputted according to filtering should be transferred (FLUTE, security or A/V).

- The service manager 231 signals by which Extensible Stylesheet Language Transformations (XSLT) logic processing should be performed when converting metadata by system into a common metadata scheme.

- The service manager 231 requests, receives and processes all sorts of information of service necessary for a common metadata handler 253 of the metadata processing unit 250, and selects and stores only information necessary for the channel database (DB) 232.

- The service manager 231 processes service-related operations (for example, an operation of changing a channel) necessary in an Electronic Program Guide (EPG) operation.

The channel database 232 stores service management/change/access-related contents among service-related information for the efficient operation of the service manager 231, and the contents are frequently inputted and outputted.

The FLUTE processing unit 240 includes a FLUTE parser and Gzip/BiM decoder 241, Session Description Protocol (SDP) parser 242, metadata buffer 243, and file buffer 244. The FLUTE processing unit 240 decodes a file that is encoded according to a FLUTE protocol and transfers the decoded file to a corresponding processing part according to each content format.

The FLUTE parser and Gzip/BiM decoder 241 decodes a file that is encoded based on the FLUTE protocol, and at this point, performs decompressing according to a compressed scheme to output a file. The content type of the outputted file may be checked on the basis of the File Description Table (FDT) content of the FLUTE protocol. Accordingly, each file is transmitted to the SDP parser 242, the metadata buffer 243, or the file buffer 244 based on the content type. The SDP parser 242 decodes an SDP file which is the file representing access information and transfers the decoded result to the service manager 231.

The metadata buffer 243 buffers metadata which is a kind of Extended Markup Language (XML) file representing overall information associated with service and content. The metadata buffer 243 also transfers the buffered metadata to a metadata convertor 251 such as XSLT processor for converting the metadata into a common metadata format. The file buffer 244 buffers various files that are used in a middleware, and stores the buffered files in a file storage 261 of the middleware processing unit 260. These files may be used by a middleware (M/W) engine 262.

The metadata processing unit 250 includes the metadata convertor 251, metadata storage 252, and common metadata handler 253. For example, the metadata convertor 251 may be XSLT processor. The metadata processing unit 250 converts metadata transmitted from the FLUTE processing unit 240 into a common metadata format being a common format, stores the converted metadata. The metadata processing unit 250 searches relevant content, and provides the searched result according to the request of each part.

The metadata convertor 241 such as XSLT processor converts a metadata into a common metadata by using XSLT based on each transmission scheme, wherein the metadata can be different from each other according to each transmission scheme. The metadata storage 252 stores the common metadata, and performs search to transfer the searched result according to the request of the common metadata handler 253. The common metadata handler 253 searches metadata according to various information requests associated with service, event and access information, and transmits the searched result to the service manager 231, an EPG manager 291, and the security manager 273. The common metadata handler 253 may store the metadata in connection with PVR data according to the request of a PVR manager 286 of the PVR processing unit 280.

The middleware processing unit 260 includes the file storage 261 and middleware engine 262. The middleware processing unit 260 loads a file that is transferred from the FLUTE processing unit 240 to drive and execute an appropriate application.

The file storage 261 stores all sorts of files to be used in the middleware engine 262, and transmits a necessary file according to a request of the middleware engine 262. The middleware engine 262 drives middleware such as Advanced Common Application Platform (ACAP), Open Cable Application Platform (OCAP), Multimedia Home Platform (MHP), and Multimedia and Hypermedia information coding Experts Group (MHEG), and receives a necessary file from the file storage 261 to display a driven application on a screen through a video post processor 294 of the I/O processing unit 290.

The audio/video (A/V) processing unit 270 includes an UDP/RTP parser and CAS 271, descrambler 272, security manager 273, audio decoder 274, video decoder 275, and System Time Clock (STC) part 276. The audio/video processing unit 270 decodes an A/V stream delivered to RTP, processes a scramble, and adjusts its sync to display on a screen.

The UDP/RTP parser and Conditional Access System (CAS) 271 parses a stream inputted according to UDP and RTP protocols to divide into an audio stream and a video stream according to a payload type. The descrambler 272 descrambles a scrambled stream based on a scramble key value and necessary parameters transmitted from the security manager 273. The security manager 273 transmits descramble information to the descrambler 272 using security information and key values delivered in RTP and metadata. The audio decoder 274 decodes an audio stream and the video decoder 275 decodes a video stream. The System Time Clock (STC) part 276 provides a reference clock for synchronizing according to a timestamp in A/V stream decoding, and also provides a reference clock for matching a replay speed with a transmitted stream. The STC part 276 is synchronized with the clock of a server using clock recovery information received from the UDP/RTP parser and CAS 271. In a PVR replay, the STC part 276 receives a clock from an upload controller 282 of the PVR processing unit 280.

The PVR processing unit 280 includes an Audio/Video (A/V) storage 281, the upload controller 282, a descrambler 283, a download controller 284, a scrambler 285, and the PVR manager 286. The PVR processing unit 280 is a part associated with a PVR (or DVR)-related function, i.e., the storage and replay of a stream.

The PVR manager 286 controls PVR-related operations. That is, the PVR manager 286 controls the download controller 284 and upload controller 282 of the PVR processing unit 280, i.e., controls storage, replay and reserve record. The PVR manager 286 communicates with the middleware engine 262 for data broadcasting record. The PVR manager 286 communicates with a User Interface (UI) manager 292 for PVR UI. The PVR manager 286 is connected to the common metadata handler 253 for storing metadata connected to stored content. The download controller 284 adds information such as a timestamp and a random access point to an A/V stream in stream record, and stores it. The scrambler 285 performs scrambling for protecting content in stream record. The A/V storage 281 stores an A/V stream. The descrambler 283 performs descrambling for replay, to the scrambled content that has been scrambled for protecting the content. The upload controller 282 transmits information such as the timestamp and the random access point to the STC 276 and PVR manager 286, and transmits a stream to the Audio decoder 274 and video decoder 275.

The I/O processing unit 290 includes the EPG manager 291, UI manager 292, user interface 293, video post processor 294, and audio post processor 295. The I/O processing unit 290 is related to a user input and an A/V output.

The EPG manager 291 receives metadata associated with the display of an EPG from the common metadata handler 253, processes the metadata in an appropriate format, and blends the processed metadata with a video stream or a middleware application through the UI manager 292 to display the blended data on a screen. The UI manager 292 interprets a user's input and requests necessary operations in connection with the service manager 231, EPG manager 291, and PVR manager 286. The user interface 293 transmits a user's input to a system through the UI manager 292. The video post processor 294 blends a video stream, a middleware application, an EPG, and all sorts of UI widgets to display the blended result on a screen. The audio post processor 295 outputs an audio stream as sound in connection with function such as volume control and mute.

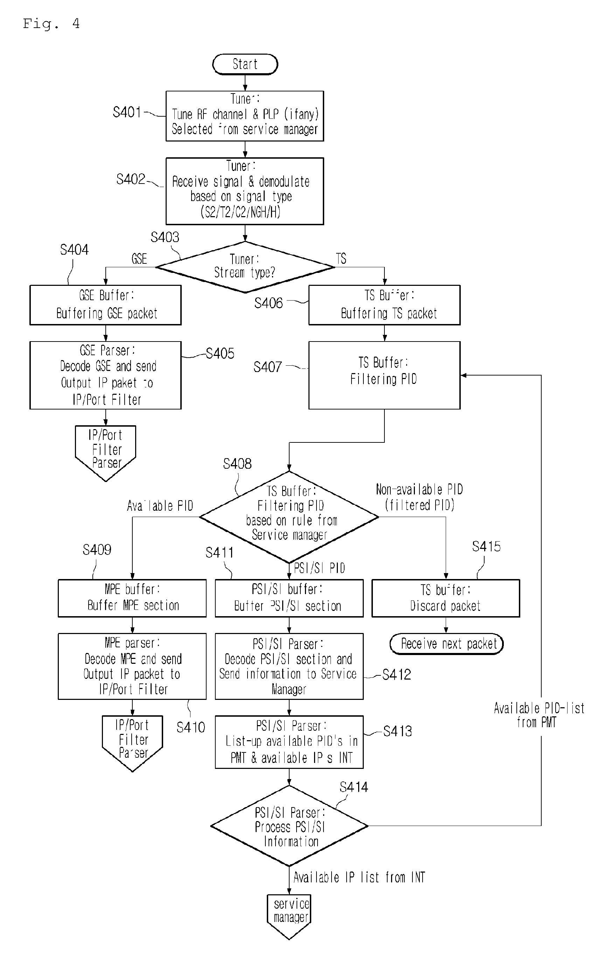

Figs. 4 through 6 are flowcharts illustrating operations of the respective parts. Thus, it can be verified what processes A/V, files, and metadata inputted through broadcasting/IP are outputted through.

Fig. 4 shows a flowchart illustrating an example of broadcast frontend action procedure. Referring to Fig. 4, the broadcast tuner/demodulator 210 tunes RF channel and PLP selected from the service manager 231 (S401). The broadcast tuner/demodulator 210 receives signal and demodulates based on signal type such as DVB S2/T2/C2/NGN/H (S402). Then, the stream type is determined whether the stream is GSE or not (S403).

If the stream type is determined as GSE at S403, the GSE buffer 212 buffers the GSE packet (S404). The GSE parser 216 decodes GSE and sends output IP packet to the IP/port filter and parser 222 (S405).

If the stream type is determined as TS at S403, the TS buffer/filter 213 buffers TS packet and filters Packet Identifier (PID) (S406 and S407). The TS buffer/filter 213 filters PID based on rule transmitted from the service manager 231 and sorts as one of available PID, PSI/SI PID, and non-available PID (S408).

Then, if the PID is determined as available PID at S408, the MPE buffer 214 buffers MPE section and the MPE parser 217 decodes MPE and sends output IP packet to IP/port filter and parser 222 (S409 and S410).

And, if the PID is determined as PSI/SI PID at S408, the PSI/SI buffer 215 buffers PSI/SI section (S411). The PSI/SI demux/parser 218 decodes PSI/SI section and sends information to the service manager 231, and lists up available PID's in Program Map Table (PMT) and available IP's in IP Notification Table (INT) (S413). The PSI/SI demux/parser 218 processes PSI/SI information (S414).

Nest, if the PID is determined as non-available PID (filtered PID) at S408, the TS buffer/filter 213 disregards packet (S415).

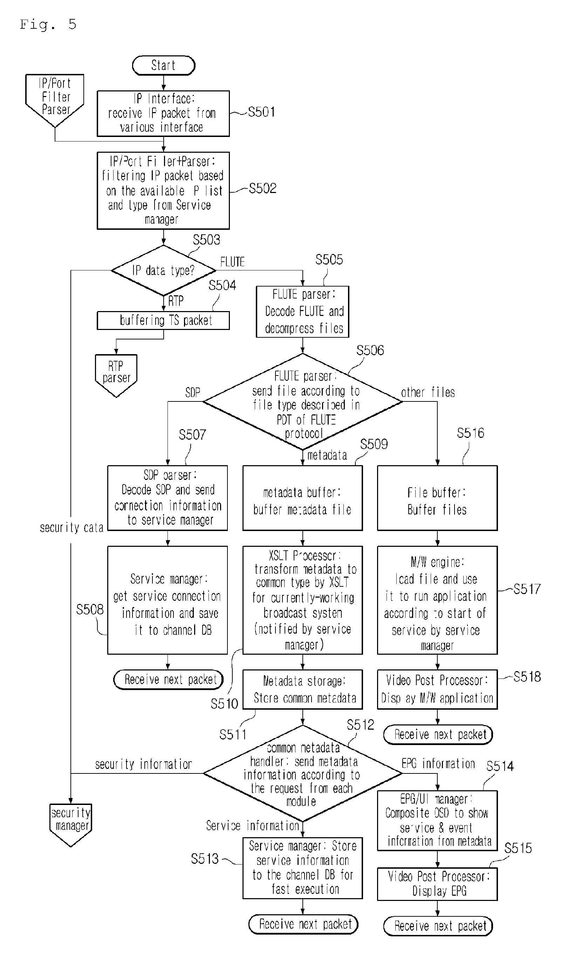

Fig. 5 shows a flowchart illustrating an example of IP frontend, FLUTE processing unit, metadata processing unit, and middleware processing unit action procedures.

Referring to Fig. 5, the IP interface 221 receives a signal such as IP packet from various interface (S501). The signal may include metadata. The IP/port filter/parser 222 filters IP packet based on the available IP list and type provided from the service manager 231 (S502). Then, the IP data type is determined whether the IP data type is FLUTE or not (S503).

If the IP data type is determined as RTP at S503, buffering TS packet is processed (S504). And the IP data type is determined as security data at S503, the information is sent to the security manager 273.

If the IP data type is determined as FLUTE at S503, the FLUTE parser 241 decodes and decompresses files (S505). And the FLUTE parser 241 sends file according to file type described in FDT of FLUTE protocol (S506).

If the file type is determined as SDP at S506, the SDP parser 242 decodes SDP and sends connection information to the service manager 231 (S507). Then, the service manager 231 gets service connection information and saves it to the channel database 232 (S508).

If the file type is determined as metadata at S506, the metadata buffer 243 buffers metadata file (S509). Then, the metadata convertor 251 transform metadata to common type metadata for currently working broadcast system, which is notified by the service manager 231 (S510). In other words, the metadata convertor 251 transforms the decoded metadata to the common type metadata for currently working transmission system according to information of transmission system signalled from the service managing unit 230. Then, the metadata storage 252 stores the common type metadata (S511).

The common metadata handler 253 sends metadata information according to the request from each module such as the security manager 273, the service manager 231, and the EPG manager 291 (S512). For example, the common metadata handler 253 provides the service metadata to the service manager 231 of the service managing unit 230. And the channel database 232 of the service managing unit 230 stores the service metadata included in the common type metadata.

At S512, if the request is requested by the security manager 273, the common metadata handler 253 sends the security information to the security manager 273. And if the request is requested by the service manager 231, the common metadata handler 253 sends the service information to the service manager 231. Then, the service manager 231 stores service information such as service metadata to the channel database 232 for fast execution (S513).

At S512, if the request is requested by the EPG manager 291, the common metadata handler 253 sends the EPG information to the EPG manager 291. Then, the EPG manager 291 and UI manager 292 composite On Screen Display (OSD) to show service and event information from metadata (S514). The video post processor 294 displays EPG (S515).

And, if the file type is determined as other files at S506, the file buffer 244 buffers file (S516). Then, the middleware (M/W) engine 262 loads file and use it to run application according to start of service by the service manager 231 (S517). The video post processor 294 displays middleware application (S518).

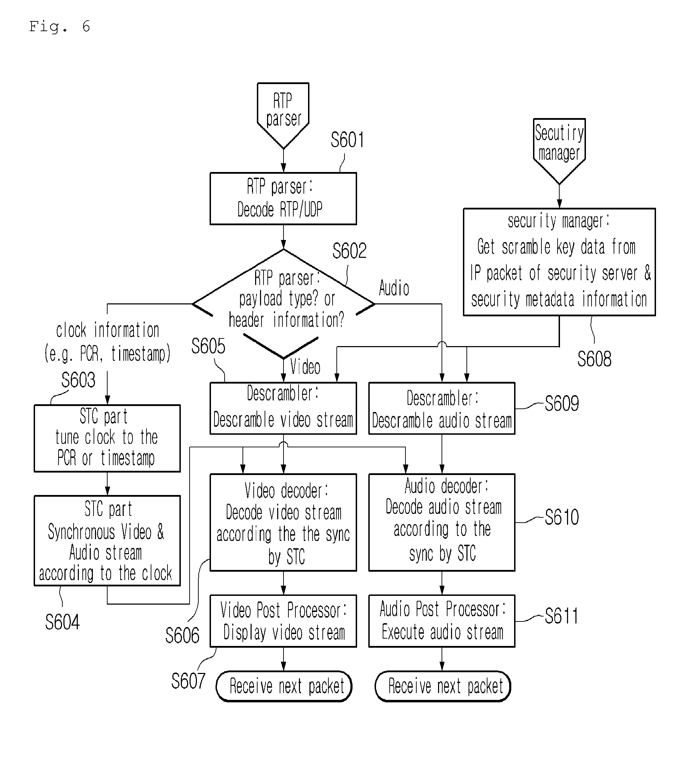

Fig. 6 shows a flowchart illustrating an example of audio/video processing unit action procedures.

Referring to Fig. 6, the UDP/RTP parser 271 decodes RTP/UDP (S601) and parses payload type or header information (S602).

If clock information such as PCR or timestamp is transmitted at S602, the STC part 276 tunes clock to the PCR or time stamp (S603), and synchronizes video and audio stream according to the clock (S604).

If the payload type means video signal at S602, the descrambler 272 descramble video stream (S605). At this time, the security manager 273 gets scrambler keys data from IP packet of security server and security metadata information, and provides them to the descrambler 272 (S608). Then, the video decoder 275 decodes video stream according to the sync by the STC part 276 (S606), and the video post processor displays video stream (S607).

If the payload type means audio signal at S602, the descrambler 272 descramble audio stream (S609). At this time, the security manager 273 gets scrambler keys data from IP packet of security server and security metadata information, and provides them to the descrambler 272 (S608). And the audio decoder 274 decodes audio stream according to the sync by the STC part 276 (S610), and the audio post processor 295 executes audio stream (S611).

It can be verified that, based on this system as discussed above, the first obstacle (metadata of each method is differently configured) of the above obstacles can be controlled by one common metadata handler by constituting common metadata including common contents according to a receiving method. Through metadata convertor such as XSLT processor, metadata of each method can be transformed into common metadata and used in common by adopting exclusive XSLT according to each method.

The second obstacle (stream transmitted using RTP is ES for DVB-H, and TS for IPTV and DVB-S2/T2/C2) can be overcome by re-configuring total transmission to be based on ES as verified in A/V processing unit of Fig. 3. It is very irrational in the aspect of transmission efficiency to put up TS on IP. Also, it is unnecessary to apply a TS decoder to a receiver.

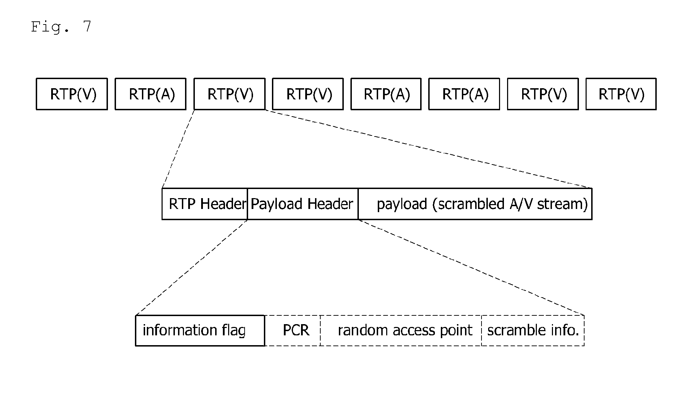

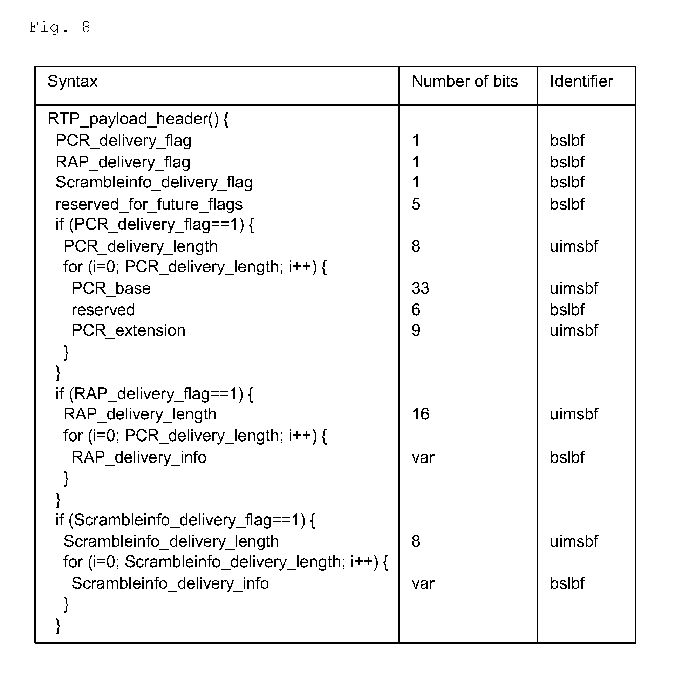

The third obstacle (method for delivering clock recovery and scramble control information) generated by above adoption can be overcome by applying a payload header design of Fig. 7 to an RTP transmission end. Additional information may be optionally put in the payload header, thereby variably transmitting clock and scramble information at an appropriate time. Detailed structure of the payload header is shown in Fig. 8. Parameters are used as the following meanings.

PCR_delivery_flag: this indicates that PCR information is transmitted.

RAP_delivery_flag: this indicates that random access point (RAP) information used for trick play is transmitted. Since RAP is not scrambled, the RAP can be used for the trick play anytime.

Scrambleinfo_delivery_flag: this indicates that scramble information is transmitted.

reserved_for_future_flags: this can be used for additional transmission of necessary information in future.

PCR_delivery_length: this indicates a length of the PCR information. Base of 33-bit and extension of 9-bit are fixed, but it can be variably defined for an additionally necessary clock-related parameter.

PCR_base: this indicates a PCR base value of 33-bit

PCR_extension: this indicates a PCR extension value of 9-bit.

RAP_delivery_length: this indicates the size of the RAP.

RAP_deli very_info: this includes the RAP information

Scrambleinfo_delivery_length: this indicates a length of the scramble information.

Scrambleinfo_delivery_info: this includes the scramble information.

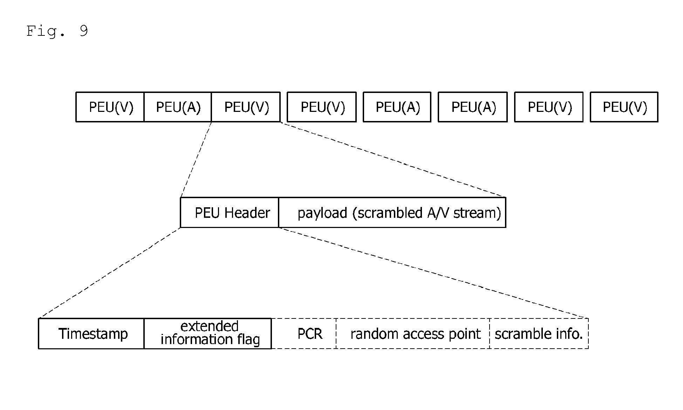

The fourth obstacle (in configuration of PVR, trick mode support and scramble/clock recovery information storage/play method) can be overcome by applying a method similar to the RTP payload header of the third obstacle. In Fig. 3, when the A/V stream is stored in the A/V storage, it is general to basically store timestamps with the respective packets attached in a download controller. However, in addition to this, additional information like disclosed in Fig. 9 is together stored, thereby facilitating clock recovery and trick mode supports with respect to a scrambled storage stream. Particularly, by handling the RAP as header information, a trick play becomes easy even for a stream coded by a method such as H.264 for which an RAP access is not easy. This will be referred to as Prefixed ES-packet Unit (PEU) header. Fig. 9 is a diagram illustrating a detailed structure of the PEU header. The parameters are used as the following meanings.

Timestamp: this indicates a reference time when an ES packet stored in 32-bit should be outputted.

PCR_delivery_flag: this indicates that PCR information is transmitted.

RAP_delivery_flag: this indicates that random access point (RAP) information used for trick play is transmitted. Since RAP is not scrambled, the RAP can be used for the trick play anytime.

Scrambleinfo_delivery_flag: this indicates that scramble information is transmitted.

reserved_for_future_flags: this can be used for additional transmission of necessary information in future.

PCR_delivery_length: this indicates a length of the PCR information. Base of 33-bit and extension of 9-bit are fixed, but it can be variably defined for an additionally necessary clock-related parameter.

PCR_base: this indicates a PCR base value of 33-bit.

PCR_extension: this indicates a PCR extension value of 9-bit.

RAP_delivery_length: this indicates the size of the RAP.

RAP_delivery_info: this includes the RAP information.

Scrambleinfo_delivery_length: this indicates a length of the scramble information.

Scrambleinfo_delivery_info: this includes the scramble information.

As described above, the present invention solves a limitation in that a common use is difficult despite similar functions in a metadata processing unit, A/V decoding and trick play, and PVR operation in an IP-based broadcasting (IP-based two-way TV such as IPTV), allowing a backend part except frontend receiving end to be used regardless of mobile TV (DVB-H), IPTV, and next-generation transmission TV (DVB-S2/C2/T2).

It will be apparent to those skilled in the art that various modifications and variations can be made in the present invention without departing from the invention.

## Claims

1. An apparatus for receiving a signal, the apparatus comprising:
a frontend configured to receive the signal including metadata;
a decoding unit configured to decode the received signal;
a metadata processing unit configured to transform the decoded metadata to common type metadata; and
a service managing unit configured to store service metadata included in the common type metadata.

2. The apparatus according to claim 1, wherein the frontend is one of an Internet Protocol (IP) frontend and a broadcast frontend.

3. The apparatus according to claim 1, wherein the decoding unit includes a File Delivery over Unidirectional Transport (FLUTE) parser and decoder for decoding an encoded file based on FLUTE protocol.

4. The apparatus according to claim 1, wherein the metadata processing unit includes a metadata convertor transforming the decoded metadata to the common type metadata, a metadata storage storing the common type metadata, and a common metadata handler providing the service metadata to the service managing unit.

5. The apparatus according to claim 4, wherein the metadata convertor is an Extensible Stylesheet Language Transformations (XSLT) processor.

6. The apparatus according to claim 4, wherein the metadata convertor transforms the decoded metadata to the common type metadata for currently working transmission system according to information of transmission system signalled from the service managing unit.

7. A method of receiving a signal, the method comprising:
receiving the signal including metadata;
decoding the received signal;
transforming the decoded metadata to common type metadata;
storing service metadata included in the common type metadata.

8. The method according to claim 7, wherein the signal including metadata is received by one of an Internet Protocol (IP) frontend and a broadcast frontend.

9. The method according to claim 7, wherein the decoding is performed by a File Delivery over Unidirectional Transport (FLUTE) parser and decoder for decoding an encoded file based on FLUTE protocol.

10. The method according to claim 7, wherein the transforming the decoded metadata to common type metadata is processed by a metadata convertor.

11. The method according to claim 10, wherein the metadata convertor is an Extensible Stylesheet Language Transformations (XSLT) processor.

12. The method according to claim 10, wherein the metadata convertor transforms the decoded metadata to the common type metadata for currently working transmission system according to information of transmission system signalled from a service managing unit.
